Europäisches Patentamt

(19) European Patent Office

Office européen des brevets

(11) Publication number: 0 243 502
A1

(12) **EUROPEAN PATENT APPLICATION**

published in accordance with Art. 158(3) EPC

(21) Application number: 86906437.8

(22) Date of filing: 21.10.86

Data of the international application taken as a basis:

(86) International application number:
PCT/JP86/00532

(87) International publication number:
WO87/02298 (23.04.87 87/09)

(51) Int. Cl.³: **B 28 B 1/26**
B 29 C 41/16, B 22 F 3/22

(30) Priority: 21.10.85 JP 235532/85
14.09.86 JP 216153/86
14.09.86 JP 216154/86
14.09.86 JP 216155/86
14.09.86 JP 216156/86

(43) Date of publication of application:
04.11.87 Bulletin 87/45

(84) Designated Contracting States:
AT BE CH DE FR GB IT LI LU NL SE

(71) Applicant: KOURANSHA KABUSHIKI KAISHA
1664, Arita-cho, Nishimatsuura-gun
Saga-ken 844(JP)

(72) Inventor: EGUCHI, Tooru Kabushiki Kaisha Kouransha
nai
1664, Arita-cho Nishimatsuura-gun
Saga-ken, 844(JP)

(72) Inventor: KURITA, Sumihiko 91-26, Oaza-Miyano
Yamauchi-cho Kishima-gun
Saga-ken, 849-23(JP)

(74) Representative: Silverman, Warren et al,
HASELTINE LAKE & CO. Hazlitt House 28 Southampton
Buildings Chancery Lane
London WC2A 1AT(GB)

(54) **MOLD FOR PAD MOLDING OF POWDER.**

(57) A mold for use in the pad molding of powders of inorganic, organic or metallic materials. As a basic material that constitutes the mold, the invention uses a single material which exhibits changes of states, such as from liquid to gas or solid, softening -- hardening and low viscosity -- high viscosity depending on temperature, or a mixture of this material with other powder or a material impregnated with this material. A mold cavity is formed at a temperature at which this material is hardened or highly viscous and, after molding, a pad molding product is released from the mold at a temperature at which this material is liquid, softened or lowly viscous, or while this material is dissipated from the mold. This operation can prevent the pad molding product from being damaged during mold release operation.

EP 0 243 502 A1

# DESCRIPTION

## TITLE OF INVENTION:

MOLD FOR PAD MOLDING OF POWDER

## Technical Field:

The present invention relates to a mold for pad molding powders of inorganic, organic or metallic materials.

## Background Art:

In the field of the pad molding of powder represented by the so-called cast molding, production of an article of complex shape having an inverse taper, is extremely difficult. This is because in the case of an article of such shape, not only cracks are apt to be induced upon shaping, but also it is necessary to take out a shaped product by destroying a mold and upon destroying the mold sometimes the internal product also may be destroyed together.

In order to resolve this problem, in the prior art the following measures have been employed:

1) A method of dividing a single body into a number of section, and after the respective sections have been shaped individually, integrating them together.

2) A method of dividing a mold itself into a plurality of pieces so as to make it possible to release a product from the mold.

Representative products produced by the former method are pottery dolls and flowers, and representative products produced by the latter method are ceramic screws or the like.

According to these methods in the prior art, in addition to that too much labor is necessitated, the problem of cracking upon releasing a product from the mold would not be resolved basically, and also there is a shortcoming that flashes are generated.

The present invention has been worked out in view of the above-mentioned problems, and one object of the present invention is to provide a mold for use in the pad molding such that even an article of complex shape having an inverse taper can be molded in one action by making use of a single mold that is free from joints, generation of flashes would not occur, and releasing of a product from the mold can be achieved very easily.

Disclosure of Invention:

The present invention involves the following features:

① A mold for use in the pad molding of powders which employs, as a basic constituent element, a single material that exhibits changes of states of liquid, gas--solid, softened--hardened, or low-viscosity--high-viscosity depending upon temperature, a mixture of this material with other powders, or a material impregnated with this material; characterized in that a cavity of the above-mentioned mold is formed in a temperature range where the temperature-depending material is in a solid state, a hardened state or a high-viscosity state, and a pad molding product is released from the mold in a temperature range where the above-mentioned material is in a liquid state, a softened state or a low-viscosity state, or else in a condition where the above-mentioned material has been dissipated.

② A mold described in numbered paragraph ① above, characterized in that the above-mentioned material exhibiting changes of states of liquid, gas--solid depending upon temperature, is water, an organic solvent, a solution making use of water and an organic solvent as its solvent, resin, wax, a low-melting-point metal, carbon dioxide, or the like.

③ The mold described in numbered paragraph ① above, characterized in that the above-mentioned material exhibiting changes of states of softened-hardened or low-viscosity--high-viscosity depending upon temperature, is organic rubber, metholose, hydroxyethyl cellulose, etc.

The mold according to the present invention involves the above-mentioned features, thereby generation of flashes and/or cracks upon molding is eliminated, and moreover, upon releasing a product from the mold, the mold can be destroyed very easily, so that the product can be easily released from the mold without damaging the internal pad molding product.

<Materials for Molds>

Representative ones of the materials changing their states between liquid or gas and solid depending upon temperature are water, an organic solvent, a solution making use of these materials as its solvent, resin, wax, a low-melting-point metal, carbon dioxide and the like, while the materials changing their states between a softened state and a hardened state or between a low-viscosity state and a high-viscosity state are organic rubber, metholose, hydroxyethylcellulose and the like, and either materials can be all used as a material for a mold so long as they exhibit changes of solid--liquid or gas, softened--hardened or low-viscosity--high-viscosity at a temperature not higher than a melting point of a powder mixture liquid for pad molding (for example, casting slurry). With respect to such materials, a mold could be formed of a single material of these materials, or else after other powders have been mixed with such material or other materials have been impregnated with such material, they could be used.

In the case of using the subject material for mixing or impregnation, the material has a function as a binder for the powder or a function of giving a strength to the impregnated material. With regard to the powder to be mixed with the material exhibiting phase changes, at least unless it is a material reacting with the material exhibiting phase changes, powders of all the organic, inorganic and metallic materials can be used. The mixing proportion of the powder relative to the material exhibiting phase changes is 2~99%. In addition, as to the materials to be impregnated, in order that the material can easily deform along the shape of a master model, materials such as foamed resin or foamed rubber having a flexibility are employed.

<Formation of a Mold Cavity and Pad Molding>

① The case of employing a single material of the above-described materials exhibiting changes of states depending upon temperature as a mold material.

Formation of a Mold Cavity:

In the case of forming a cavity by transfer of a master model, powder or a continuous body of the subject material is filled around the model, and after the configuration of the model has been transferred by making the material deform or flow following the configuration of the model, the internal model is removed at a temperature at which the material is hardened or solidified.

In the case of forming a cavity by mechanical removing work, a cavity having a shape close to a model is preliminarily formed by the subject material, or a block-shaped body is preliminarily made, and in a temperature range where the material is hardened or solidified, the cavity is finished by machining.

Pad Molding:

A mixture of liquid and powder is poured into the above-described cavity at a temperature in the hardening or solidifying temperature range of the subject material.

② The case of employing a mixture of the material exhibiting phase changes and powder.

Formation of a Mold Cavity:

A master model is embedded in a mixture of a material exhibiting phase changes (for instance, water, alcohol, resin,······) and powder, and the embedded model is removed in the changed high-viscosity or solid temperature range of the subject material. After the model has been removed, a cavity that is an accurate replica of the shape of the model, is formed.

Pad Molding:

The subject material serves as a binder for the mixed powder, but once an accurate mold cavity has been formed, even if the binder should be molten, softened, hardened, or made to have a low viscosity or it should be dissipated, the shape of the cavity is accurately maintained, and hence, upon molding it is not always necessary for the binder to have a strength, and the binder could be dissipated.

Accordingly, in the above-specified case, besides the cases where the mixture of liquid and powder for the pad molding is poured at a temperature in the range of the solid, hardened or highly viscous state of the above-mentioned material, it is also possible to pour the mixture of liquid and powder in the molten, softened or lowly viscous state of the subject material or in its dissipated state after formation of the cavity. In other words, in the above-specified case, once an accurate cavity has been formed, it is possible to pour at every state and at every temperature.

③ The case of employing a material impregnated with the material exhibiting phase changes:

Formation of a Mold Cavity:

A material having a flexibility and a water absorbing property such as foamed resin, foamed rubber and the like is impregnated with a material exhibiting phase changes (for instance, water, alcohol, resin,·····), and a master model is embedded therein. After a rigidity has been given to a mold by changing a temperature to a solidifying, hardening or high-viscosity temperature of the impregnating material, the embedded model is removed. At the place of the removed model is formed a cavity that is a replica of the shape of the model.

Pad Molding:

Pouring of the mixture of liquid and powder for use in the pad molding is carried out at the temperature in the hardening, solidifying or high-viscosity region of the subject material.

<Destruction of a Mold>

At the time point when the pad molding has reached a predetermined thickness, the mold is destroyed. With respect to a mold in which the subject material remains, destruction of a mold is effected at a melting, softening or low-viscosity temperature of the subject material. In this temperature range, the mold would lose a rigidity, and hence the internal molded product can be easily taken out without being damaged. Also, in the case of a mold in which the subject material has been dissipated and does not remain, the mold can be easily destroyed regardless of a temperature.

<Mixture Liquid for Use in the Pad Molding>

"Pad molding" according to the present invention implies every method in which a fluid having powder for molding mixed or dispersed therein is employed and deposited onto a mold surface for molding, and representative one thereof is cast molding making use of slurry or slip.

Molding powders applicable to the present invention, involve the entire scope from inorganic or organic powders to metallic powders, and are not limited.

Best Mode for Carrying Out the Invention

Preferred Embodiment 1:

① Mold

Raw material powder for a mold: carbon microballoon (98 vol %)

Binder: distilled water (2 vol %)

In a mixture prepared by mixing the above-described balloon and distilled water at a room temperature was embedded a master model made of rubber having a shape of a rose flower, and thereafter the entire assembly was refrigerated at −10°C.

7

The master model was taken out of the mold that had been rigidly held in shape by refrigeration, and thereby a cavity was formed. The attained mold was porous and had a water absorbing property.

② Slurry Components for Use in Cast Molding

A slurry for use in cast molding of pottery containing about 30% of water, added with about 10% of alcohol in order to lower a solidifying (freezing) temperature.

③ Molding

The above-described slurry was poured into the above-mentioned frozen mold. The slurry had its moisture component absorbed by the mold, and pad molding was effected.

④ Destruction of the Mold

After molding, the mold was defrosted at a room temperature. Due to defrosting of the moisture component the mold reduced its shape-holding capability, and after drying it took a state nearly close to self-disintegration. The molded product could be taken out of the mold without being damaged at all.

The attained molded product was quite sound and no crack was found at all. In addition, with respect to a strength too, the product was not inferior at all to the conventional product molded by making use of gypsum.

Preferred Embodiment 2:

① Mold

Raw material powder: polyethylene (80 vol %)

Binder: distilled water (20 vol %)

After the mold had been frozen in a similar manner to Preferred Embodiment 1 above, a cavity was formed.

② Slurry Components

The same slurry as that used in Preferred embodiment 1 above.

③ Molding

The above-described slurry was poured into the above-mentioned mold. The slurry had its moisture component absorbed by the mold, and pad molding was effected.

④ Destruction of the mold

After molding, the mold was defrosted at a room temperature, and a molded product was taken out in a similar manner to Preferred Embodiment 1 above.

The molded product was sound and no crack was found at all, In addition, with respect to a strength too, the product was not inferior at all to the conventional product molded by making use of gypsum.

Preferred Embodiment 3:

① Mold

Raw material powder: polyethylene (50 vol %)

Binder: distilled water (50 vol %)

A cavity was formed in a similar manner to Preferred Embodiment 1 above.

② Slurry Components

A slurry of alumina powder added with 28% of water, 1% of deflocculant and 10% of alcohol.

③ Molding

The above-described slurry was poured into the above-mentioned mold. The slurry had its moisture component absorbed by the mold, and pad molding was effected.

④ Destruction

After molding, the mold was dried under a reduced pressure and a moisture component was dissipated (sublimation phenomenon). Simultaneously with dissipation of a moisture component, the mold lost a shape holding power and disintegrated, and hence the molded product could be taken out easily without being damaged.

The attained molded product was sound and no crack was found at all. In addition, with respect to a strength too, the product was not inferior at all to the conventional product molded by making use of gypsum.

Preferred Embodiment 4:

① Mold

Raw material powder: alumina (20 vol %)

Binder: distilled water (80 vol %)

A cavity was formed in a similar manner to Preferred Embodiment 1 above.

② Slurry Components

A slurry of nickel powder added with 28% of water, 1% of deflocculant and 10% of alcohol.

③ Molding

The above-described slurry was poured into the above-mentioned mold. The slurry had its moisture component absorbed by the mold, and pad molding was effected.

④ Destruction

The molded product was taken out in a similar manner to Preferred Embodiment 1 above.

The attained molded product was sound and no crack was found at all. In addition, with respect to a strength too, the product was not inferior at all to the conventional product molded by making use of gypsum.

Preferred Embodiment 5:

① Mold

Raw material powder: tungstem carbide powder (3 vol %)

Binder: distilled water (97 vol %)

A cavity was formed in a similar manner to Preferred Embodiment 1 above.

② Slurry components

A slurry of polyethylene powder added with 70% of water, 1% of deflocculant and 10% of alcohol.

③ Molding

The above-described slurry was poured into the above-mentioned mold. The slurry had its moisture component absorbed by the mold, and pad molding was effected.

④ Destruction

The molded product was taken out in a similar manner to Preferred Embodiment 1 above.

The attained molded product was sound and no crack was found at all. In addition, with respect to a strength too, the product was not inferior at all to the conventional product molded by making use of gypsum.

Preferred Embodiment 6:

① Mold

Raw material powder: polyethylene (50 vol %)

Binder: distilled water (43 vol %) · methanol (7 vol %)

Polyethylene, methanol and distilled water was mixed together, and after a master model made of rubber and having a propeller shape was embedded therein, the assembly was frozen at −20°C. The master model was taken out of the frozen mold, and thereby a cavity was formed.

② Slurry Components

A slurry for producing silicon nitride for use in reactive sintering.

A slurry prepared by adding 30% of alcohol to a slurry of silicon powder containing about 28% of water and 1% of deflocculant for the purpose of adjusting a freezing temperature.

③ Molding

The above-described slurry was poured into the above-mentioned mold. The slurry had its moisture component absorbed by the mold, and pad molding was effected.

④ Destruction

After molding, the mold was defrosted at a room temperature. The mold lost its shape holding capability simultaneously with defrosting of the moisture component, and the molded product could be taken out easily without being damaged.

The attained molded product was sound and no crack was found at all. In addition, with respect to a strength too, the product was not inferior at all to the conventional product molded by making use of gypsum.

Preferred Embodiment 7:

① Mold

Raw material powder: polyethylene (80 vol %)

Binder: distilled water (20 vol %)

In a mixture prepared by mixing the above-described polyethylene and distilled water at a room temperature, was embedded a master model made of rubber and having a shape of rose flower, and thereafter the entire assembly was frozen at -10°C. The master model was extracted from the mold whose shape is rigidly held by freezing, and thereby a cavity was formed. Then, this mold was dried and thereby a moisture component was dissipated.

② Molding

A slurry for cast molding of alumina powder containing about 30% of water, was poured into the above-described dried mold. The slurry has its moisture component absorbed by the mold and pad molding was effected.

③ Destruction

After molding, the mold was destroyed. Since the binder had been dissipated, the mold could be destroyed almost in a manner close to self-destruction, and the molded product could be taken out of the mold without being damaged at all.

The attained molded product was quite sound and no crack was found at all. In addition, with respect to a strength too, the product was not inferior at all to the conventional product molded by making use of gypsum.

Preferred Embodiment 8:

① Mold

Raw material powder: alumina powder (20 vol %)

Binder: distilled water (80 vol %)

In a mixture prepared by mixing alumina powder and distilled water at a room temperature, was embedded a master model made of naphthalene, and thereafter the mold was frozen at -10°C. Then the model was removed from the mold that was rigidly held in shape by freezing. The model could be removed without damaging the mold.

② Slurry

A slurry of powder of 5μm in grain size containing 23% of water, 10% of alcohol and 1% of deflocculant.

③ Molding

The slurry was poured into the above-described mold. The slurry was absorbed by the mold, and pad molding was effected.

④ Destruction

After molding, the mold was defrosted and thereby returned to the original state having a flexibility. The molded product could be taken out without being damaged at all.

The attained molded product was sound and no crack was found at all. In addition, with respect to a strength too, the product was not inferior at all to the product molded by making use of gypsum.

Preferred Embodiment 10:

① Mold

A master model made of rubber was embedded in a small piece of sponge impregnated with metholose serving as a binder, and the entire assembly was heated up to 60°C. The binder was gelled by heating and the mold was hardened. Then, the model was removed from the hardened mold. The model could be taken out without damaging the mold.

② Slurry Components

A pottery slurry for use in molding which contains about 30% of water.

③ Molding

The slurry was poured into the above-described mold. The slurry had its moisture component absorbed by the mold, and

14

pad molding was effected.

④     Removal from Mold

After molding, the mold was cooled to a low-viscosity temperature region of metholose to restore the original flued state, and thereby the internal molded product was removed. The molded product could be taken out without being damaged at all.

The attained molded product was sound and no crack was found at all. In addition, with respect to a strength too, the product was not inferior at all to the product molded by making use of gypsum.

Preferred Embodiment 11:

①     Raw Material of Mold: ice

A porous mold was made of pulverized ice, and it was held at a temperature not higher than the melting point (-10°C).

②     Powder-Mixed Liquid for Use in Pad Molding:

In order that the liquid may not be frozen at the holding temperature of the mold, about 10% alcohol was added to an alumina mixture liquid containing about 25% of water.

③     Molding

The slurry was poured into the above-described mold. The slurry had its moisture component absorbed by the mold, and pad molding was effected.

④     Removal from Mold.

After molding, the mold was heated up to a room temperature. The mold restored to its original state of water as it was heated, and was destroyed by itself. The molded product could be taken out without being damaged at all.

The attained molded product was quite sound and no crack was found at all. In addition, with respect to a strength too, the product was not inferior at all to the conventional product molded by making use of gypsum.

Preferred Embodiment 12:

① Raw Material of Mold: naphthalene

A porous mold was produced by making use of powder of naphthalene.

② Slurry Components

A slurry for use in cast molding of a pottery, which contains about 30% of water.

③ Molding

The above-described slurry was poured into the above-mentioned mold made of naphthalene. The slurry had its moisture component absorbed by the mold, and pad molding was effected.

④ Removal from Mold

After molding, the naphthalene of the mold was vaporized and thus dissipated.

The molded product was quite sound and there was no defect.

Preferred Embodiment 13:

① Structure of Mold

A master model made of silicone rubber was embedded in sponge made of organic rubber, and after the organic rubber was hardened by cooling the assembly to −40°C, the internal model was removed. At the place where the model was removed, was formed a cavity that is extremely accurate in shape and size.

② Slurry Components

A slurry of Ni powder containing 23% of water and 10% of alcohol.

③ Molding

The above-described slurry was poured into the above-mentioned mold cooled to -40°C. The slurry had its moisture component absorbed by the mold, and pad molding was effected.

④ Removal from Mold

The mold was heated up to a room temperature, and under the condition where elasticity was recovered, the internal molded product was taken out by extention-contraction deforming the mold.

The molded product could be taken out without being damaged. In addition, the molded product was quite sound.

Preferred Embodiment 14:

① Mold

Raw material powder: polyethylene powder (80 vol %) Binder: metholose (20 vol %)

After a master model made of rubber and having a shape of a rose flower had been embedded in a mixture prepared by mixing the above-described polyethylene powder and metholose at a room temperature, the entire assembly was heated up to 60°C. Due to gellation of metholose, the mold was hardened. Then the master model was taken out of this hardened mold, and a cavity was formed.

② Molding

A slurry for use in cast molding of a pottery that contains about 30% of water was poured into the above-described mold. The slurry had its moisture component absorbed by the mold, and pad molding was effected.

③    Removal from Mold

After molding, the mold was cooled to 20°C.

The binder restored the original state of aqueous solution again as it is cooled, and the mold again restored a fluid condition. The internal molded product could be taken out of the mold without being damaged at all.

The attained molded product was quite sound and no crack was found at all. In addition, with respect to a strength too, the product was not inferior at all to the conventional product molded by making use of gypsum.

Preferred Embodiment 15:

①    Mold

Raw material powder: alumina powder (50 vol %)

Binder: silicone rubber (50 vol %)

After a master model made of naphthalene was embedded in a mixture prepared by mixing the above-described alumina powder and silicone rubber at a room temperature, the entire assembly was held at -30°C. Due to hardening of the binder, the mold was hardened. Then the master model was made to disappear from this hardened model, and thereby a cavity was formed. Next, the mold having this cavity formed is returned to a room temperature to soften the binder.

②    Molding

A slurry of Ni powder added with about 23% of water and 1% of deflocculant was poured into the above-described mold in which a binder had been softened. The slurry had its moisture component absorbed by the mold, and pad molding was effected.

③    Removal from Mold

Since the binder had been softened, the internal molded product was taken out by extension-contraction deforming the mold.

The attained molded product was sound and no crack was found at all. In addition, with respect to a strength too, the product was not inferior at all to the product molded by making use of gypsum.

Industrial Applicability:

As described above, with the mold according to the present invention, even an article of complex shape such as having an inverse taper can be pad-molded very easily. Accordingly, the mold according to the present invention is useful for production of sintered articles (especially complex-shaped articles of ceramics) regardless of organic, inorganic and metallic materials.

Claims:

(1)     A mold for use in the pad molding of powders which employs, as a basic constituent element, a single material that exhibits changes of state of liquid, gas--solid, softened--hardened,     and     low-viscosity--high-viscosity depending upon temperature, a mixture of this material with other powders, or a material impregnated with this material; characterized in that a cavity of said mold is formed in a temperature range where the temperature-depending material is in a solid state, a hardened state or a high-viscosity state, and a pad molding product is released from the mold in a temperature range where said material is in a liquid state, a softened state or a low-viscosity state, or else in a condition where said material had been dissipated.

(2)     A mold as claimed in Claim 1, characterized in that said material exhibiting changes of states of liquid, gas--solid depending upon temperature, is water, an organic solvent, a solution making use of water or an organic solvent as its solvent, resin, wax, a low-melting-point metal, carbon dioxide, or the like.

(3)     A mold as claimed in Claim 1, characterized in that said material exhibiting changes of states of softened-hardened or low-viscosity--high-viscosity depending upon temperature, is organic rubber, metholose, hydroxyethyl cellulose, etc.

# INTERNATIONAL SEARCH REPORT

International Application No. **PCT/JP86/00532**

| I. CLASSIFICATION OF SUBJECT MATTER (if several classification symbols apply, indicate all) [3] |
|---|

According to International Patent Classification (IPC) or to both National Classification and IPC

Int.Cl$^4$    B28B1/26, B29C41/16, B22F3/22

| II. FIELDS SEARCHED |
|---|

| Minimum Documentation Searched [4] | |
|---|---|
| Classification System | Classification Symbols |
| IPC | B28B1/26, B29C41/16, B22F3/22 |

| Documentation Searched other than Minimum Documentation to the Extent that such Documents are Included in the Fields Searched [5] | |
|---|---|
| Jitsuyo Shinan Koho | 1926 – 1986 |
| Kokai Jitsuyo Shinan Koho | 1971 – 1986 |

| III. DOCUMENTS CONSIDERED TO BE RELEVANT [14] | | |
|---|---|---|
| Category* | Citation of Document, [16] with indication, where appropriate, of the relevant passages [17] | Relevant to Claim No. [18] |
| Y | JP, A, 53-34810 (Kubota, Ltd.) 31 March 1978 (31. 03. 78) Page 1, lower left column, lines 5 to 13 (Family: none) | 1, 2, 3 |
| A | JP, B2, 57-28323 (Ford Motor Company) 16 June 1982 (16. 06. 82) Page 3, column 5, lines 16 to 32 & US, A, 4,067,943 & GB, A, 1,594,033 | 1, 2, 3 |
| A | JP, B1, 26-1130 (Hosono Kuma) 5 March 1951 (05. 03. 51) Page 1, left column, lines 2 to 15 (Family: none) | 2 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

| IV. CERTIFICATION | |
|---|---|
| Date of the Actual Completion of the International Search [2] | Date of Mailing of this International Search Report [2] |
| December 15, 1986 (15.12.86) | December 26, 1986 (26.12.86) |
| International Searching Authority [1] | Signature of Authorized Officer [10] |
| Japanese Patent Office | |